Europäisches Patentamt

European Patent Office

Office européen des brevets

Veröffentlichungsnummer: **0 285 785**
**A1**

## EUROPÄISCHE PATENTANMELDUNG

Anmeldenummer: 88102630.6

Int. Cl.⁴ **B23K 26/02 , G01J 5/44**

Anmeldetag: 23.02.88

Priorität: 26.03.87 DE 3709904

Veröffentlichungstag der Anmeldung:
12.10.88 Patentblatt 88/41

Benannte Vertragsstaaten:
AT BE CH DE FR GB IT LI NL SE

Anmelder: **Siemens Aktiengesellschaft Berlin und München**
**Wittelsbacherplatz 2**
**D-8000 München 2(DE)**

Erfinder: **Sliva, Eduard, Dipl.-Ing.**
**Chiemgaustrasse 54**
**D-8000 München 90(DE)**
Erfinder: **Stark, Wolfgang**
**Amalienstrasse 43**
**D-8000 München 40(DE)**

Verfahren zum Erfassen einer von einem Laser auf ein Werkstück abgegebenen Leistung.

Es wird ein Verfahren beschrieben, welches im Gegensatz zu den bisherigen Methoden die in ein mittels Laser bearbeitetes Werkstück eingebrachte Laserleistung (P) nicht nur abschätzt, sondern exakt ermittelt. Hierzu wird das bei der Bearbeitung im Werkstück entstehende Schallemissionssignal ausgewertet und mit der Leistung (P) des Lasers gekoppelt. Eine derartig durch mehrere Meßpunkte aufgestellte Eichkurve, die bereichsweise linearisiert ist, ordnet jeder mittleren Frequenz (1) des Schallemissionssignales eine bestimmte Laserleistung (P) zu. Durch Einführung bestimmter Toleranzgrenzen der aufgenommenen Frequenz (f) lassen sich ungewollte Abweichungen der Laserleistung (P) problemlos feststellen.

FIG 2

## Verfahren zum Erfassen einer von einem Laser auf ein Werkstück abgebenen Leistung

Die Erfindung betrifft ein Verfahren zum Erfassen einer von einem Laser auf ein Werkstück abgegebenen Leistung, insbesondere beim Laserschweißen.

Bisherige Methoden zur Abschätzung der auf ein Werkstück abgegebenen Laserleistung benutzen hierzu entweder eine Temperaturmessung im Werkstück oder messen die nicht vom Werkstück aufgenommene Laserlichtleistung, die von der eingestellten Laserleistung abgezogen wird.
Wie aus der Patentschrift DE 30 29 957 hervorgeht, wird zur Beurteilung des Verschleißes an Schneidwerkzeugen das während eines Schneidvorganges auftretende Schallemissionssignal ausgewertet. Die Schallemissionsanalyse beruht auf der Erscheinung, daß bei der Verformung eines Metalles stattfindende Gleitprozesse bzw. Phasenumwandlungen Schallimpulse aussenden, deren Frequenzen bis weit in das Ultraschallgebiet reichen. Im allgemeinen wird die Schallemissionsanalyse als ein Verfahren zur zerstörungsfreien Werkstoffprüfung eingesetzt. Eine genaue Beschreibung darüber liefert der Aufsatz "Schallemissionsanalyse" aus Ingenieur Digest, Band 11, 1972, Heft 10, Seite 62 ff.

Der Erfindung liegt die Aufgabe zugrunde, ein Verfahren zu liefern, mit dem bei der Bearbeitung eines Werkstückes mit einem Laser die auf das Werkstück abgegebene Leistung ermittelt werden kann.

Die Aufgabe wird erfindungsgemäß dadurch gelöst, daß die Abhängigkeit der bei der Bearbeitung mit einem Laser im Werkstück auftretenden Schallemissionssignale von der Laserleistung zur Ermittlung der Laserleistung ausgewertet wird.

Bei der Bearbeitung mit einem Laser entstehen im Werkstück Schallemissionssignale, welche durch einen piezoelektrischen Aufnehmer erfaßt und in elektrische Signale umgewandelt werden. Derartige Signale können für praktische Messungen in einem Frequenzgebiet zwischen 50 kHz und 1,5 MHz ausgewertet werden. Das Schallemissionssignal besteht aus einer Vielzahl von überlagerten Schwingungen und aus einer Vielzahl von schnell hintereinander emittierten Einzelimpulsen. Wird nun bei verschiedenen Laserleistungen das jeweilige Schallemissionssignal aufgenommen, so läßt sich in einem Diagramm die Abhängigkeit der Laserleistung von der Ausbildung des Schallemissionssignales in Form einer stetigen, im speziellen Fall linearen Funktion darstellen. Als charakteristisch für das Schallemissionssignal sind die Amplitude oder die Frequenz des gesamten Signales oder einer bestimmten darin enthaltenen Schwingung verwertbar.

Eine besonders vorteilhafte Ausgestaltung der Erfindung sieht vor, daß die Nulldurchgänge des Schallemissionssignales gezählt werden und, durch Zwei dividiert, eine mittlere Frequenz dieses Signales ergeben. Die Abhängigkeit der Laserleistung von dieser mittleren Frequenz des Schallemissionssignales ergibt eine Eichkurve, die die mittlere Frequenz und die Laserleistung exakt miteinander verbindet.

Damit zur Erstellung einer Eichkurve nicht umfangreiche Messungen erforderlich sind, ist es vorteilhaft, über den in Frage kommenden Bereich der Laserleistung bzw. der mittleren Frequenz des Schallemissionssignales mehrere Meßpunkte gleichmäßig zu verteilen und die dazwischenliegenden Bereiche als linear anzunehmen.

Eine einfache Anordnung, um eine vorbeschriebene mittlere Frequenz eines Schallemissionssignales zu erhalten, sieht vor, daß die Schallemissionssignale von einem piezoelektrischen Aufnehmer erfaßt und in elektromagnetische Signale umgewandelt werden und über einen Vorverstärker mit Filter und einem Hauptverstärker mit Filter einem Nulldurchgangsdetektor zugeführt werden, der die mittlere Frequenz des Signales ermittelt.

Eine weitere besondere Ausgestaltung der Erfindung verwendet eine Triggerschaltung, die beim Laserschweißen, insbesondere beim Laserimpulsschweißen eines Werkstückes das zu einem Laserschweißimpuls zugehörige Schallemissionssignal in einem der Impulszeit und -dauer entsprechenden Fenster erfaßt, wobei die Triggerschaltung über eine im Bereich des Streulichtes des Lasers angebrachte Fotodiode den Anfang des Schweißimpulses erfaßt und die Zeitdauer am Hauptverstärker eingestellt wird. Dadurch werden Störsignale vor und hinter dem Fenster ausgeblendet.

Die beiden Ausführungsbeispiele zeigen schematisch

Fig. 1 eine Anordnung zum Laserschweißen mit gleichzeitiger Schallemissionsmessung unter Verwendung einer Triggerschaltung,

Fig. 2 ein Diagramm, welches auf der Abszisse die Laserleistung P in Watt und auf der Ordinate die Frequenz der Schallemission f in kHz zeigt.

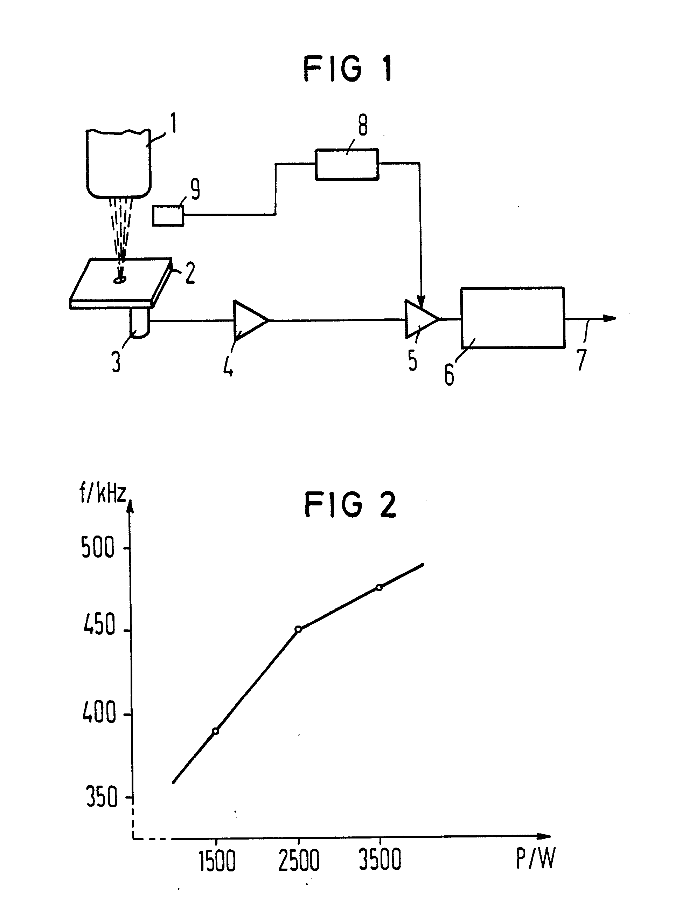

In Fig. 1 ist ein Laser 1 dargestellt, der ein Werkstück 2 mittels Laserschweißimpulsen bearbeitet. Die Dauer eines Laserschweißimpulses beträgt in diesem Fall 2 ms. Das Werkstück besteht aus einer Legierung von CuSn 6. Die nachgeschalteten Geräte sind ein piezoelektrischer Aufnehmer 3, ein Vorverstärker mit Filter 4, ein Hauptverstärker mit Filter 5 und ein Nulldurchgangsdetektor, in diesem Fall ein Transientenrecorder 6. Die Triggerschaltung 8 sorgt zusammen mit der Fotodiode 9, die im Streulichtbereich des Lasers plaziert ist, für die Auslösung der Aufnahme des Schallemissionsimpulses am Anfang des Laserschweißimpulses und der Hauptverstärker bestimmt die Zeitdauer des Aufnahmefensters. Die Umwandlung des Körperschalles in elektrische Schwingungen wird von dem piezoelektrischen Aufnehmer 3 durchgeführt. Das durch den Vorverstärker mit Filter 4 und Hauptverstärker 5 aufbereitete elektrische Signal wird vom Nulldurchgangsdetektor 6 derart ausgewertet, daß für die Zeit des Schweißimpulses von ca. 2 ms, die in etwa der Zeitdauer des Schallemissionssignales entspricht, durch Zählung der Nulldurchgänge eine mittlere Frequenz dieses aus vielen überlagerten Schwingungen bestehenden Signales ermittelt wird. Die dem Schweißimpuls entsprechende Laserleistung, die gleichzeitig festgehalten wird, wird in dem in Fig. 2 gezeigten Diagramm mit der Frequenz f kombiniert. Es ergibt sich eine Abhängigkeit der Frequenz f, gemessen in kHz, von der eingestellten Laserleistung P, gemessen in Watt, in der Bereichsweise lineasierten dargestellten Kurve. Die eingestellten Laserleistungen zwischen 1500 und 3500 Watt bewirken in dem verwendeten Werkstück Schallemissionsfrequenzen von ca. 350 bis 500 kHz. Zur Automatisierung eines Schweißverfahrens mit einem Laser läßt sich nach Aufnahme einer solchen Eichkurve durch Messen der Schallemssionsfrequenz nachprüfen, ob sich die auf das Werkstück eingebrachte Laserleistung P verändert. Unter Festsetzung von bestimmten Toleranzgrenzen kann somit mit der Messung und Auswertung des Schallemissionssignals eine Veränderung der vom Laser auf das Werkstück übertragenen Leistung P kontrolliert werden. Derartige Veränderungen treten z.B. bei einer ungewollten Verstellung der Leistung am Laser oder bei einer Verschmutzung eines als Schutz für den Laser angebrachten Glases auf. Zur Ausführung des beschriebenen Beispieles wurden folgende Geräte verwendet:
- Schallemissionsaufnehmer von Fa. Physical Acustic Coorporation, Typ W 46 D-23
- Vorverstärker mit Filter vom gleichen Lieferanten, Typ 1220 B
- Hauptverstärker vom gleichen Lieferanten, Typ 2200
- als Nulldurchgangsdetektor wurde ein Transientenrecorder der Fa. Kontron, Typ SMR eingesetzt.

## Ansprüche

1. Verfahren zum Erfassen einer von einem Laser (1) auf ein Werkstück (2) abgegebenen Leistung, insbesondere beim Laserschweißen,
**dadurch gekennzeichnet,**
daß die Abhängigkeit der dabei im Werkstück (2) auftretenden Schallemissionssignale von der Laserleistung zur Ermittlung der Laserleistung ausgewertet wird.

2. Verfahren nach Anspruch 1,
**dadurch gekennzeichnet,**
daß die mittlere Frequenz (f) des Schallemissionssignales ausgewertet wird.

3. Verfahren nach einem der vorhergehenden Ansprüche,
**dadurch gekennzeichnet,**
daß die Abhängigkeit zwischen mittlerer Frequenz (f) und Laserleistung (P) bereichsweise linearisiert wird.

4. Anordnung zur Durchführung des Verfahrens nach einem der vorhergehenden Ansprüche,
**dadurch gekennzeichnet,**
daß das von einem piezoelektrischen Aufnehmer (3) erfaßbare Schallemissionssignal über einen Vorverstärker mit Filter (4) und einen Hauptfilter (5) einem Nulldurchgangsdetektor (6) zuführbar ist.

5. Anordnung zur Ermittlung der beim Laserschweißen abgegebenen Laserleistung nach Anspruch 4,
**dadurch gekennzeichnet,**
daß das Schallemissionssignal, welches aufgrund eines Laserschweißimpulses im Werkstück (2) auftritt, mittels Triggerschaltung (8) und Hauptverstärker (5) in einem der Impulszeit und -dauer entsprechenden Fenster erfaßbar ist.

# FIG 1

# FIG 2

| | Europäisches Patentamt | EUROPÄISCHER RECHERCHENBERICHT | Nummer der Anmeldung |
|---|---|---|---|

EP 88 10 2630

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 064 352 (INOUE-JAPAX RESEARCH INCORP.) * Seite 2, Zeile 12 - Seite 3, Zeile 11; Seite 7, Zeile 4 - Seite 8, Zeile 9; Seite 8, Zeile 25 - Seite 9, Zeile 24; Abbildungen 1,2 * | 1 | B 23 K 26/02 G 01 J 5/44 |
| A | --- | 4 | |
| X | WELDING RESEARCH SUPPLEMENT, Band 64, Nr. 2, Februar 1985, Seiten 49s-54s, Miami, Florida, US; G.K. LEWIS et ql.: "Plasma monitoring of laser beam welds" * Seite 51-s, Spalte 1, Absatz 3; Seite 51-s, Spalte 3, Absatz 2; Seite 52-s, Spalte 1, Absatz 3 - Spalte 3, Absatz 2; Seite 54-s, Spalte 1, Absatz 3; Abbildungen 6-12 * --- | 1 | |
| X | JOURNAL OF THE ACOUSTICAL SOCIETY OF AMERICA, Band 72, Nr. 2, August 1982, Seiten 316-319, Acoustial Society of America, New York, US; K. TODA et al.: "An infrared sensor using the high temperature-dependent performance of a liquid delay line oscillator" * Insgesamt * | 1 | |
| A | IDEM --- | 4 | RECHERCHIERTE SACHGEBIETE (Int. Cl.4) B 23 K G 01 J |
| A,D | EP-A-0 045 942 (SIEMENS AG) * Seite 2, Zeile 15 - Seite 3, Zeile 10; Seite 4, Zeile 25 - Seite 5, Zeile 10; Abbildung 2 * ----- | 4,5 | |

Der vorliegende Recherchenbericht wurde für alle Patentansprüche erstellt

| Recherchenort | Abschlußdatum der Recherche | Prüfer |
|---|---|---|
| DEN HAAG | 11-07-1988 | ARAN D.D. |